# EUROPÄISCHE PATENTSCHRIFT

(11) **EP 3 499 103 B1**
(45) Veröffentlichungstag und Bekanntmachung des Hinweises auf die Patenterteilung: **21.02.2024**
(21) Anmeldenummer: 18210439.8
(22) Anmeldetag: 05.12.2018
(51) Int. Cl.: F16K 31/524, F16K 31/56, F16K 11/00

(54) **VENTILBETÄTIGUNGSVORRICHTUNG UND SANITÄRVENTIL**
VALVE ACTUATION DEVICE AND SANITARY VALVE
DISPOSITIF D'ACTIONNEMENT DE SOUPAPE ET SOUPAPE SANITAIRE

(30) Priorität: 07.12.2017 DE 102017222196
(43) Veröffentlichungstag der Anmeldung: 19.06.2019
(73) Patentinhaber: Hansgrohe SE, 77761 Schiltach (DE)
(72) Erfinder: Stulz, Thomas, 77709 Oberwolfach (DE)
(74) Vertreter: Patentanwälte Ruff, Wilhelm, Beier, Dauster & Partner mbB

(56) Entgegenhaltungen:
- EP-A1- 2 213 918
- DE-A1- 1 750 380
- DE-A1- 2 147 187
- DE-A1- 2 232 058
- DE-A1- 3 741 854
- DE-U1-202016 001 106
- Grohe AG: "GROHE SMART DESIGN", , 30. März 2017 (2017-03-30), XP002790682, Gefunden im Internet: URL:https://cdn.cloud.grohe.com/Literature /Brochures/EN/GROHE_Rapido_Smartbox/origin al/GROHE_Rapido_Smartbox.pdf?_ga=2.1942300 52.841786572.1555406988-941985050.15554069 88&_gac=1.16692292.1555406998.Cj0KCQjw-tXl BRDWARIsAGYQAmdmbu5mnUrfg66gbDhGbL5KM0SnRA m58U7jxNIcCKiM6G8cgWOlQ24aAgO7EALw_wcB [gefunden am 2019-04-16]

## Beschreibung

Die Erfindung bezieht sich auf eine Ventilbetätigungsvorrichtung zur Betätigung eines Ventils, insbesondere eines Sanitärventils, in einer Axialbetätigungsbewegung für eine erste Ventilfunktion, insbesondere eine Absperrfunktion, und in einer Drehbetätigungsbewegung für eine zweite Ventilfunktion, insbesondere eine Mengenregulier- oder Mischfunktion, sowie auf ein mit einer solchen Ventilbetätigungsvorrichtung ausgerüstetes Sanitärventil.

Ventile, die sowohl eine Absperrfunktion als auch eine Mengenregulier- oder Mischfunktion besitzen, werden beispielsweise im Sanitärbereich verwendet. Unter Absperrfunktion ist hierbei vorliegend zu verstehen, dass die Abgabe eines entsprechenden Fluids, wie Wasser, an einem entsprechenden Ventilausgang wahlweise freigegeben oder abgesperrt, typischerweise vollständig abgesperrt, werden kann. Diese Absperrfunktion wird daher häufig auch als Ein/Aus-Funktion des Ventils bezeichnet. Unter Mengenregulierfunktion ist zu verstehen, dass mit der betreffenden Ventilfunktion die Menge an abgegebenem Fluid reguliert werden kann, d.h. variabel auf unterschiedliche Durchflussraten zwischen dem Wert null und einem maximalen Wert bzw. einer maximalen Fluiddurchflussrate des Ventils eingestellt werden kann, typischerweise in Form einer stufenlosen Mengenregulierung. Unter Mischfunktion ist zu verstehen, dass mit dieser Ventilfunktion zwei getrennt zugeführte Fluide, wie Kaltwasser und Warmwasser, in variabel einstellbaren Anteilen zur Bereitstellung eines entsprechenden Mischfluids gemischt werden können. Dabei kann die Mischfunktion eine reine Mischfunktion ohne zusätzliche Mengenregulierung oder alternativ eine Mischfunktion sein, bei der zusätzlich zu den Mischungsanteilen der beteiligten Fluide auch die Gesamtmenge an gemischtem Fluid regulierbar ist, d.h. variabel und vorzugsweise stufenlos einstellbar ist.

Es ist bekannt, für derartige Ventile zwei getrennte Bedienelemente für die Absperrfunktion einerseits und für die Mengenregulier- oder Mischfunktion andererseits einzusetzen, die hierzu als Nutzerschnittstelle fungieren, d.h. jeweils als dasjenige Element, das vom Benutzer zur Bewirkung der betreffenden Funktion ergriffen oder anderweitig direkt gehandhabt wird. In vielen Fällen beinhaltet die Ventilbetätigung für die Absperrfunktion eine Axialbetätigungsbewegung und für die Mengenregulier- oder Mischfunktion eine Drehbetätigungsbewegung. In alternativen Ausführungen von entsprechenden Ventilbetätigungsvorrichtungen kann die Axialbetätigungsbewegung für die Mengenregulier- oder Mischfunktion und die Drehbetätigungsbewegung für die Absperrfunktion verantwortlich sein, und in weiteren alternativen Ausführungen können die beiden Betätigungsbewegungen auch zwei verschiedenen anderen herkömmlichen Ventilfunktionen zugeordnet sein.

In der Firmenschrift "Grohe Smart Design" ist eine Ventilbetätigungsvorrichtung der eingangs genannten Art für eine Sanitärdusche offenbart, wobei ein kombiniert dreh- und axialbeweglicher Druckknopf als Nutzerschnittstelle fungiert. Durch axiale Druckbetätigung des Druckknopfs kann eine gewünschte Strahlart oder ein gewünschter Verbraucher aktiviert bzw. deaktiviert werden, und durch Drehen des Druckknopfes kann die Wassermenge eingestellt werden.

Die Offenlegungsschrift DE 37 41 854 A1 offenbart eine Ventilbetätigungsvorrichtung einer sanitären Mischarmatur mit einer Mischkammer, einem Kalt- und einem Warmwasserzulauf sowie einem Mischwasserablauf und einem drehbaren und axialbeweglichen Stellglied, wobei durch Drehen des Stellglieds die Mischwassertemperatur einstellbar ist und durch axiales Verschieben des Stellglieds entgegen einer Federkraft in eine von einer zugeordneten Sperre definierte selbsthaltende Stellung ein konstanter Wasserstrom freigegeben wird. Durch erneutes Betätigen des Stellglieds in Richtung entgegen der Federkraft gibt die Sperre das Stellglied wieder frei.

Der Erfindung liegt als technisches Problem die Bereitstellung einer Ventilbetätigungsvorrichtung der eingangs genannten Art, mit der sich ein Ventil mindestens in einer Axialbetätigungsbewegung für eine erste Ventilfunktion und in einer Drehbetätigungsbewegung für eine zweite Ventilfunktion mit hohem Bedienkomfort und hoher Funktionszuverlässigkeit betätigen lässt und die mit vergleichsweise geringem Aufwand realisierbar ist, sowie eines mit einer solchen Ventilbetätigungsvorrichtung ausgerüsteten Sanitärventils zugrunde.

Die Erfindung löst dieses Problem durch die Bereitstellung einer Ventilbetätigungsvorrichtung mit den Merkmalen des Anspruchs 1 und eines Sanitärventils mit den Merkmalen des Anspruchs 8.

Die erfindungsgemäße Ventilbetätigungsvorrichtung beinhaltet ein kombiniert dreh- und axialbewegliches Bedienelement als Nutzerschnittstelle, das drehfest und axialbeweglich mit einem Drehübertragungskörper gekoppelt ist, der mit einem Drehbetätigungsteil des Ventils verbindbar ist. Das Bedienelement weist eine selbsthaltende Ausgangsstellung, eine gegenüber der Ausgangsstellung axial vorverlagerte Vorwärts-Endstellung und eine gegenüber der Ausgangsstellung axial zurückverlagerte, selbsthaltende Rückwärts-Endstellung auf. Durch axiale Vorbewegung des Bedienelements in die Vorwärts-Endstellung wird die erste Ventilfunktion aktiviert, und durch Verdrehung des Bedienelements wird die zweite Ventilfunktion aktiviert. In vorteilhaften Ausführungen erfolgt die Verdrehung um eine zur Axialrichtung parallele Drehachse, in alternativen Ausführungen um eine zur Axialrichtung nicht-parallele Drehachse. Ein elastisches Vorspannelement spannt das Bedienelement axial in Richtung der Rückwärts-Endstellung vor.

Ein Rastkulissenkörper ist drehbeweglich und axialfest mit einem Axialbetätigungsteil des Ventils verbindbar und weist eine Rasteinrichtung zum Halten des Bedienelements in der Ausgangsstellung und eine Axialkulisse zum Freigeben einer Axialbewegung des Bedienelements in die Rückwärts-Endstellung auf, wobei die Rasteinrichtung und die Axialkulisse in Drehrichtung des Rastkulissenkörpers gegeneinander versetzt angeordnet sind. Eine zwischen dem Bedienelement und dem Rastkulissenkörper wirkende Drehkulissenführung dient dazu, den Rastkulissenkörper beim Vorbewegen des Bedienelements in seine Vorwärts-Endstellung zu verdrehen.

Damit stellt die Erfindung eine vom Benutzer mit hohem Bedienkomfort bedienbare Ventilbetätigungsvorrichtung zur Verfügung, um ein entsprechendes Ventil, das zwei oder mehr Ventilfunktionen besitzt, zur Aktivierung jeweils einer von zwei Ventilfunktionen zu betätigen. Hierzu genügt die Handhabung nur eines Bedienelements durch den Benutzer. Durch axiales Vorbewegen des Bedienelements in seine Vorwärts-Endstellung kann der Benutzer die erste Ventilfunktion aktivieren, z.B. einen Ventilausgang freigeben oder absperren, und durch Verdrehen des gleichen Bedienelements kann der Benutzer die zweite Ventilfunktion aktivieren, z.B. die Menge und/oder das Mischungsverhältnis für ein vom Ventil abgegebenes Fluid variabel, insbesondere stufenlos, einstellen.

Vorteilhaft besitzt das Bedienelement zwei auf unterschiedlichem axialem Niveau liegende selbsthaltende Stellungen, zum einen die Ausgangsstellung und zum anderen die demgegenüber axial zurückverlagerte Rückwärts-Endstellung. In der Ausgangsstellung kann es z.B. optisch bzw. aus Designgründen vorteilhaft mit einer umgebenden Fläche z.B. einer Sanitärarmatur oder einer anderen Einrichtung, in welcher die Ventilbetätigungsvorrichtung verbaut ist, fluchten. In der dagegen axial zurückverlagerten Rückwärts-Endstellung kann es dann bequem vom Benutzer gegriffen werden, um durch Verdrehung die zweite Ventilfunktion zu aktivieren. Von der selbsthaltenden Ausgangsstellung kann das Bedienelement zunächst durch axiales Vordrücken vom Benutzer in die axial vorverlagerte Vorwärts-Endstellung gebracht werden, aus der es dann unter der Wirkung des elastischen Vorspannelements in die Rückwärts-Endstellung gelangen kann. Dieses Funktionsprinzip ähnelt demjenigen von herkömmlichen versenkbaren Backofen-Drehknöpfen mit dem Unterschied, dass dort das axiale Vordrücken des Bedienknopfs keine Bedienfunktion auslöst, sondern nur dem Ausrasten aus der selbsthaltenden Ausgangsstellung dient, während vorliegend durch das axiale Vorverlagern des Bedienelements in die Vorwärts-Endstellung die erste Ventilfunktion aktiviert wird.

Der Rastkulissenkörper sorgt für eine ausrastbare Selbsthaltung des Bedienelements in der Ausgangsstellung. Durch Vorbewegen des Bedienelements in die Vorwärts-Endstellung kann die Rastung gelöst werden, und durch die Drehkulissenführung kann der Rastkulissenkörper gegenüber dem Bedienelement verdreht werden, so dass dann die Axialkulisse des Rastkulissenkörpers eine axiale Rückbewegung des Bedienelements in die Rückwärts-Endstellung freigibt.

Durch erneutes axiales Vorwärtsdrücken kann der Benutzer das Bedienelement von der selbsthaltenden Rückwärts-Endstellung in die Vorwärts-Endstellung vorschieben und wiederum die erste Ventilfunktion aktivieren. Zudem kann dabei die Drehkulissenführung den Rastkulissenkörper wiederum gegenüber dem Bedienelement verdrehen, wodurch die Axialkulisse mit dem Bedienelement außer Eingriff gelangt und stattdessen die Rasteinrichtung mit dem Bedienelement in Eingriff kommt, so dass das Bedienelement anschließend wiederum unter der Wirkung des elastischen Vorspannelements in die von der Rasteinrichtung definierte selbsthaltende Ausgangsstellung gelangt, wenn der Benutzer das Bedienelement loslässt.

Insgesamt resultiert die erfindungsgemäße Ventilbetätigungsvorrichtung somit in einem hohem Bedienkomfort für den Benutzer, und die Ventilbetätigungsvorrichtung ist mit relativ geringem Herstellungsaufwand und/oder wenigen Bauteilen realisierbar.

In einer Weiterbildung der Erfindung ist der Rastkulissenkörper als eine Rastkulissenhülse mit einer Hülsenmantelfläche ausgebildet, an der die Rasteinrichtung und die Axialkulisse ausgebildet sind, mit denen wenigstens ein korrespondierendes Rast-/Kulissenelement des Bedienelements zusammenwirkt. Dies stellt eine funktionell und herstellungstechnisch vorteilhafte Realisierung für den Rastkulissenkörper dar. In einer vorteilhaften Ausführung ist der Rastkulissenkörper als einteiliges Bauteil gefertigt.

In entsprechenden Ausgestaltungen der Erfindung ist die Rasteinrichtung von einem Stirnendbereich mindestens eines an der Hülsenmantelfläche radial vorspringenden Axialsteges gebildet, vorzugsweise von einem Stirnendbereich mehrerer, in Hülsenumfangsrichtung voneinander beabstandet angeordneter Axialstege, und/oder die Axialkulisse ist von mindestens einer axialen Ausnehmung in der Hülsenmantelfläche gebildet, vorzugsweise von mehreren, in Hülsenumfangsrichtung voneinander beabstandeten Ausnehmungen. Bei der jeweiligen Ausnehmung kann es sich um eine Nut oder einen die Hülsenmantelfläche radial durchbrechenden Schlitz handeln. Das Anordnen jeweils mehrerer Axialstege und/oder axialer Ausnehmungen am Umfang des Hülsenmantels kann die Stabilität und das Führungsverhalten für das Zusammenwirken der Rastkulissenhülse mit dem Bedienelement unterstützen.

In einer Weiterbildung der Erfindung ist der Rastkulissenkörper als eine Rastkulissenhülse ausgebildet, die an einer Stirnseite ein Schrägflächenprofil als rastkörperseitiger Teil der Drehkulissenführung aufweist, wobei mit dem Schrägflächenprofil ein Gegenflächenprofil am Bedienelement als bedienelementseitiger Teil der Drehkulissenführung zusammenwirkt. Dies stellt eine konstruktiv vorteilhafte Realisierung für die Drehkulissenführung dar.

In einer Weiterbildung der Erfindung sind der Rastkulissenkörper als eine Rastkulissenhülse und der Drehübertragungskörper als eine Drehübertragungshülse ausgebildet, die koaxial zueinander angeordnet sind. Diese Maßnahme hat konstruktive und funktionelle Vorteile. So kann bei Bedarf die Drehübertragungshülse als koaxiale Führung für die gegenüber der Drehübertragungshülse bewegliche Rastkulissenhülse genutzt werden.

In einer Weiterbildung der Erfindung weist die Ventilbetätigungsvorrichtung zwischen dem Rastkulissenkörper und dem Drehübertragungskörper eine Verdrehsperre auf, die ein Verdrehen des Rastkulissenkörpers gegenüber dem Drehübertragungskörper nur in einer speziellen Stellung des Bedienelements freigibt, nämlich nur dann, wenn der axiale Abstand des Bedienelements von seiner Vorwärts-Endstellung, d.h. seiner maximal vorbewegten Axialstellung, einen vorgebbaren Freigabeabstand unterschreitet. Dieser Freigabeabstand ist zweckmäßig kleiner gewählt als der axiale Abstand zwischen der Ausgangsstellung und der Vorwärts-Endstellung dies Bedienelements, und speziell ist der Freigabeabstand in entsprechenden Ausführungen so gering gewählt, dass der Rastkulissenkörper erst dann für ein Verdrehen gegenüber dem Drehübertragungskörper und damit auch gegenüber dem mit dem Drehübertragungskörper drehfest gekoppelten Bedienelement freigegeben wird, wenn zuvor durch das axiale Vorbewegen des Bedienelements die erste Ventilfunktion aktiviert worden ist.

In einer konstruktiv vorteilhaften Ausgestaltung der Erfindung umfasst die Verdrehsperre mindestens einen Sperrsteg, der radial am Drehübertragungskörper absteht und in Axialrichtung verläuft, und mindestens eine mit diesem zusammenwirkende, radial am Rastkulissenkörper abstehende Sperrnase. In entsprechenden Realisierungen steht der Sperrsteg radial nach innen am Drehübertragungskörper ab, und die Sperrnase steht radial nach außen am Rastkulissenkörper ab, oder alternativ steht der Sperrsteg radial nach außen am Drehübertragungskörper ab, und die Sperrnase steht radial nach innen am Rastkulissenkörper ab.

Das erfindungsgemäße Sanitärventil beinhaltet eine Ventilkartusche mit einem Drehbetätigungsteil zur Bewirkung einer Mengenregulier- oder Mischfunktion und mit einem Axialbetätigungsteil zur Bewirkung einer Absperrfunktion. Zusätzlich ist es mit der erfindungsgemäßen Ventilbetätigungsvorrichtung ausgerüstet, die dazu an der Ventilkartusche angebracht ist, so dass das Sanitärventil vom Benutzer komfortabel bedient werden kann. Das Sanitärventil eignet sich insbesondere für einen Einbau in eine Sanitärarmatur oder einen anderen Sanitärgegenstand dergestalt, dass das Bedienelement in seiner Ausgangsstellung mit einer das Bedienelement umgebenden Fläche der Sanitärarmatur bzw. des Sanitärgegenstands oder einer anderen umgebenden Einbaufläche oder Einbauwand fluchtet. In dieser Stellung kann das Bedienelement vom Benutzer axial vorgedrückt werden. Nach Erreichen seiner axial zurückverlagerten Rückwärts-Endstellung steht es entsprechend gegenüber der umgebenden Fläche vor und kann vom Benutzer zur Ausführung der Drehbetätigung gegriffen werden. Anschließend kann es wieder axial vorgedrückt und in seine Ausgangsstellung zurückgebracht werden.

Vorteilhafte Ausführungsformen der Erfindung sind in den Zeichnungen dargestellt und werden nachfolgend beschrieben. Hierbei zeigen:
- Fig. 1: eine perspektivische Explosionsansicht von schräg oben auf ein Sanitärventil mit Ventilkartusche und Ventilbetätigungsvorrichtung,
- Fig. 2: eine perspektivische Explosionsansicht von schräg unten auf das Sanitärventil von Fig. 1,
- Fig. 3: eine Perspektivansicht von schräg unten auf ein Bedienelement der Ventilbetätigungsvorrichtung von Fig. 1,
- Fig. 4: eine Einbau-Seitenansicht des Sanitärventils von Fig. 1 mit dem Bedienelement in selbsthaltender Ausgangsstellung,
- Fig. 5: eine Längsschnittansicht eines Teils der Ventilbetätigungsvorrichtung von Fig. 1 mit dem Bedienelement in der selbsthaltenden Ausgangsstellung,
- Fig. 6: die Ansicht von Fig. 4 mit dem Bedienelement in einer gedrückten Zwischenstellung,
- Fig. 7: die Schnittansicht von Fig. 5 mit dem Bedienelement in der gedrückten Zwischenstellung,
- Fig. 8: die Ansicht von Fig. 4 mit dem Bedienelement in seiner VorwärtsEndstellung,
- Fig. 9: die Schnittansicht von Fig. 5 mit dem Bedienelement in der VorwärtsEndstellung,
- Fig. 10: eine Längsschnittansicht des Sanitärventils von Fig. 1 mit dem Bedienelement in seiner Vorwärts-Endstellung,
- Fig. 11: die Ansicht von Fig. 4 mit dem Bedienelement in seiner selbsthaltenden Rückwärts-Endstellung und
- Fig. 12: die Schnittansicht von Fig. 5 mit dem Bedienelement in seiner Rückwärts-Endstellung.

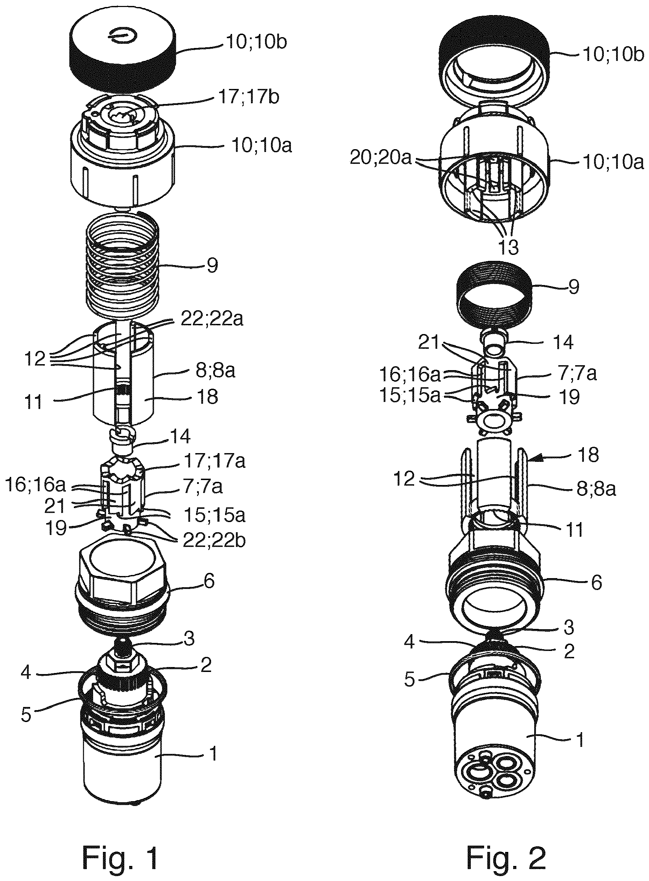

Das in den Explosionsansichten der Fig. 1 und 2 dargestellte Sanitärventil besitzt eine Absperrfunktion und eine Mengenregulier- oder Mischfunktion und beinhaltet hierfür eine Ventilkartusche 1 herkömmlicher Bauart mit einem Drehbetätigungsteil 2 zur Bewirkung der Mengenregulier- oder Mischfunktion und mit einem Axialbetätigungsteil 3 zur Bewirkung der Absperrfunktion. Das Drehbetätigungsteil 2 kann beispielsweise eine um eine Längsachse der Ventilkartusche 1 drehbewegliche Drehhülse mit einem Außenzahnkranz 4 sein, das Axialbetätigungsteil 3 kann beispielsweise ein entlang der Ventilkartuschen-Längsachse axial beweglicher Druckbetätigungsstift sein. Das Drehbetätigungsteil 2 und das Axialbetätigungsteil 3 sind im gezeigten Beispiel an einer Stirnseite eines zylindrischen Gehäuses der Ventilkartusche 1 angeordnet, und auf diese Stirnseite ist unter Zwischenfügung einer Dichtung 5 eine Spannschraube 6 aufschraubbar.

Zur Betätigung des Ventils dient eine Ventilbetätigungsvorrichtung, die im gezeigten Beispiel auf diese Stirnseite der Ventilkartusche 1 aufsetzbar ist. Die Ventilbetätigungsvorrichtung beinhaltet einen Rastkulissenkörper 7, einen Drehübertragungskörper 8, ein elastisches Vorspannelement 9 und ein Bedienelement 10. Das Bedienelement 10 umfasst einen Grundkörper 10a und eine darauf aufschnappbare Griffschale 10b.

Der Drehübertragungskörper 8 ist mit dem Drehbetätigungsteil 2 des Ventils drehfest verbindbar. Im gezeigten Beispiel besitzt der Drehübertragungskörper 8 hierzu einen Innenzahnkranz 11, der drehfest auf den Außenzahnkranz 4 des Drehbetätigungsteils 2 aufsetzbar ist, alternativ kann irgendeine andere herkömmliche drehfeste Verbindung verwendet werden. Vorzugsweise ist der Drehübertragungskörper 8 einteilig ausgeführt.

Das Bedienelement 10 fungiert als vom Benutzer direkt handhabbare Nutzerschnittstelle und ist kombiniert dreh- und axialbeweglich angeordnet und hierbei drehfest und axialbeweglich mit dem Drehübertragungskörper 8 gekoppelt. Im gezeigten Beispiel ist diese Kopplung durch mindestens einen Axialschlitz 12 im Drehübertragungskörper 8 und mindestens einen korrespondierenden Drehmitnahmesteg 13 realisiert, der sich in axialer Richtung am Bedienelement 10 erstreckt und in den Axialschlitz des Drehübertragungskörpers 8 eingreift. Vorzugsweise sind am Drehübertragungskörper 8 mehrere, in einer Umfangsrichtung beabstandet angeordnete Axialschlitze 12 und am Bedienelement eine entsprechende Anzahl korrespondierender Drehmitnahmestege 13 ausgebildet, z.B. jeweils vier. Bei einer Axialbewegung des Bedienelements 10 kann sich der jeweilige Drehmitnahmesteg 13 im zugehörigen Axialschlitz 12 verschieben, wobei der Drehübertragungskörper 12 stationär bleibt, während eine Drehbewegung des Bedienelements 10 über das Zusammenwirken des oder der Drehmitnahmestege 13 mit dem oder den Axialschlitzen 12 eine entsprechende Drehung des Drehübertragungskörpers 8 bewirkt.

Der Grundkörper 10a ist vorzugsweise einteilig ausgeführt und bildet in dieser Ausführungsvariante zusammen mit der aufgesetzten Griffschale 10b das Bedienelement 10 als einheitliches Bauteil, das vom Benutzer axial bewegbar bzw. verdrehbar ist, um die besagten Ventilfunktionen zu aktivieren.

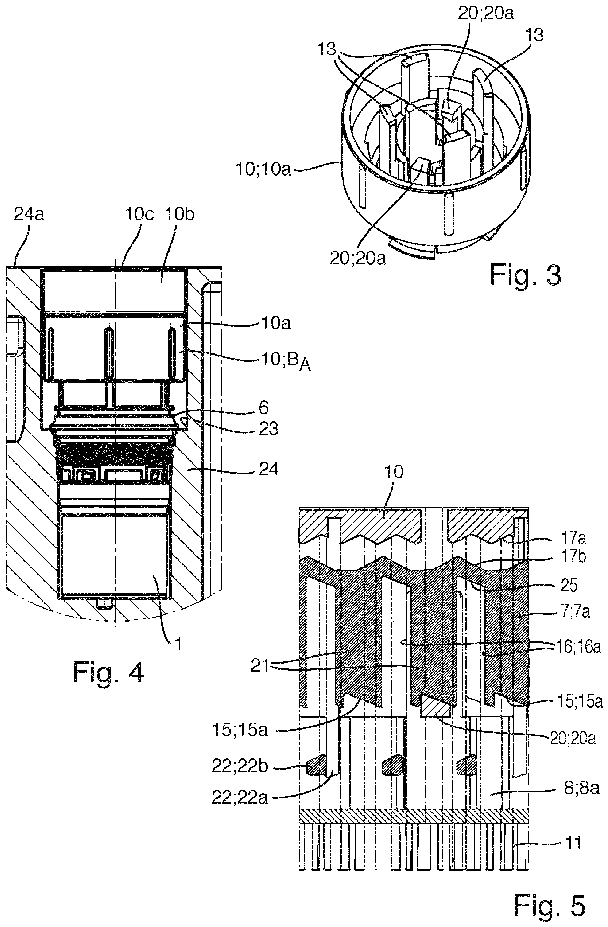

Das kombiniert dreh- und axialbewegliche Bedienelement 10 besitzt eine selbsthaltende Ausgangsstellung B_{A}, eine gegenüber dieser Ausgangsstellung B_{A} axial vorverlagerte Vorwärts-Endstellung B_{V} und eine gegenüber der Ausgangsstellung B_{A} axial zurückverlagerte, selbsthaltende Rückwärts-Endstellung B_{R}. Die Fig. 4, 8 und 11 zeigen das Sanitärventil in einer beispielhaften Einbausituation mit dem Bedienelement in der Ausgangsstellung B_{A}, der Vorwärts-Endstellung B_{V} bzw. der Rückwärts-Endstellung B_{R}. Das elastische Vorspannelement 9, bei dem es sich z.B. um eine Feder, wie eine Schraubendruckfeder, handeln kann, spannt das Bedienelement 10 axial in Richtung der Rückwärts-Endstellung B_{R} vor.

Der Rastkulissenkörper 7 ist drehbeweglich und axialfest mit dem Axialbetätigungsteil 3 des Ventils verbindbar. Hierfür kann irgendeines der dem Fachmann zu diesem Zweck geläufigen Verbindungsmittel verwendet werden. Im gezeigten Beispiel dient hierzu eine Positionierschraube 14, die auf das Axialbetätigungsteil 3 des Ventils aufgeschraubt werden kann und mit einem Ringflansch den Rastkulissenkörper 7 drehbeweglich und axialfest am Axialbetätigungsteil 3 hält. Vorzugsweise ist der Rastkulissenkörper 7 einteilig ausgeführt.

Der Rastkulissenkörper 7 weist eine Rasteinrichtung 15 zum Halten des Bedienelements 10 in der Ausgangsstellung B_{A} und eine Axialkulisse 16 zum Freigeben einer Axialbewegung des Bedienelements 10 in die Rückwärts-Endstellung B_{R} auf.

Eine Drehkulissenführung 17 wirkt zwischen dem Bedienelement 10 und dem Rastkulissenkörper 8, um den Rastkulissenkörper 8 beim axialen Vorbewegen des Bedienelements 10 in die Vorwärts-Endstellung B_{V} zu verdrehen.

In entsprechenden Ausführungsformen ist der Rastkulissenkörper 7, wie im gezeigten Beispiel, als eine Rastkulissenhülse 7a mit einer Hülsenmantelfläche 19 ausgebildet, an der die Rasteinrichtung 15 und die Axialkulisse 16 ausgebildet sind, mit denen wenigstens ein korrespondierendes Rast-/Kulissenelement 20 des Bedienelements 10 zusammenwirkt. Im gezeigten Beispiel ist die Rasteinrichtung 15 von einem als Raste gestalteten Stirnendbereich 15a mindestens eines an der Hülsenmantelfläche 19 radial vorspringenden Axialsteges 21 gebildet.

Vorzugsweise sind an der Hülsenmantelfläche 19 in Umfangsrichtung beabstandet voneinander mehrere radial vorspringende Axialstege 21a mit zugehörigen, rastend ausgeführten Stirnendbereichen 15a ausgebildet. Ebenso ist die Axialkulisse 16 vorzugsweise von mehreren axialen Ausnehmungen 16a in der Hülsenmantelfläche 19 gebildet, die in Umfangsrichtung voneinander beabstandet angeordnet sind.

In entsprechenden Ausführungsformen ist der Rastkulissenkörper 7 als eine Rastkulissenhülse 7a ausgebildet, und der Drehübertragungskörper 8 ist als eine Drehübertragungshülse 8a ausgebildet, die koaxial zur Rastkulissenhülse 7a angeordnet ist. So ist im gezeigten Ausführungsbeispiel die Rastkulissenhülse 7a mit ihrer Mantelfläche 19 koaxial in einer Mantelfläche 18 der Drehübertragungshülse 8a aufgenommen.

In entsprechenden Ausführungen weist die Rastkulissenhülse 7a an einer Stirnseite ein Schrägflächenprofil 17a als rastkörperseitiger Teil der Drehkulissenführung 17 auf. Passend dazu weist dann das Bedienelement 10 ein mit dem Schrägflächenprofil 17a zusammenwirkendes Gegenflächenprofil 17b als bedienelementseitiger Teil der Drehkulissenführung 17 auf.

In entsprechenden Ausführungen weist die Ventilbetätigungsvorrichtung wie im gezeigten Beispiel eine zwischen dem Rastkulissenkörper 7 und dem Drehübertragungskörper 8 wirkende Verdrehsperre 22 auf, die ein Verdrehen des Rastkulissenkörpers 7 gegenüber dem Drehübertragungskörper 8 nur dann freigibt, wenn der axiale Abstand des Bedienelements 10 von seiner Vorwärts-Endstellung B_{V} einen vorgebbaren Freigabeabstand unterschreitet. Der Freigabeabstand ist in vorteilhaften Ausführungen derart vorgegeben, dass ein Verdrehen des Rastkulissenkörpers 7 gegenüber dem Drehübertragungskörper 8 erst dann freigegeben wird, wenn sich das Bedienelement 10 seiner Vorwärts-Endstellung B_{V} so weit genähert hat, dass die zugehörige erste Ventilfunktion aktiviert worden ist.

Die Verdrehsperre 22 kann, wie gezeigt, beispielsweise durch mindestens einen Sperrsteg 22a, der radial am Drehübertragungskörper 8 absteht und axial verläuft, und mindestens eine mit diesem korrespondierend zusammenwirkende Sperrnase 22b realisiert sein, die radial am Rastkulissenkörper 7 absteht. Im gezeigten Ausführungsbeispiel weist der Drehübertragungskörper 8 mehrere, z.B. zwei, in Umfangsrichtung beabstandet angeordnete, radial nach innen abstehende Sperrstege 22a auf, während am Rastkulissenkörper 7 mehrere, z.B. sechs, radial nach außen abstehende Sperrnasen 22b ausgebildet sind. Beim schrittweisen Verdrehen des Rastkulissenkörpers 7 gegenüber dem Drehübertragungskörper 8 kommt mindestens je eine der Sperrnasen 22b gegen mindestens einen der Sperrstege 22a, z.B. je eine Sperrnase 22b abwechselnd gegen je einen von zwei Sperrstegen 22a, zum Anschlag, um dadurch die gewünschte Verdrehsperre bereitzustellen.

Nachstehend wird unter Bezugnahme insbesondere auf die Fig. 4 bis 12 auf die Funktionsweise der gezeigten Ventilbetätigungsvorrichtung eingegangen, wozu beispielhaft auf eine Einbausituation Bezug genommen wird, in welcher das Sanitärventil mit der Ventilkartusche 1 und der aufgesetzten Ventilbetätigungsvorrichtung in eine Ventilaufnahmeöffnung 23 einer Umgebungswand 24 mit einer frontseitigen Sichtfläche 24a eingesetzt ist.

Die Fig. 4 und 5 zeigen das eingesetzte Sanitärventil mit dem Bedienelement 10 in seiner selbsthaltenden Ausgangsstellung B_{A}. Vorzugsweise fluchtet in dieser Ausgangsstellung B_{A} eine Frontseite 10c des Bedienelements 10 mit der frontseitigen Sichtfläche 24a der Umgebungswandung 24. In dieser Ausgangsposition B_{A} wirkt das Rast-/Kulissenelement 20 des Bedienelements 10 mit der Rasteinrichtung 15 zusammen, indem die jeweilige Rastnase 20a in den Stirnendbereich 15a des zugehörigen Axialsteges 21 rastend eingreift. Diese Verrastung sichert das Bedienelement 10 gegen axiales Zurückbewegen gegenüber dem Rastkulissenkörper 7, der seinerseits axialfest mit dem Axialbetätigungsteil 3 des Ventils verbunden ist. Das Axialbetätigungsteil 3 des Ventils befindet sich hierbei in seiner axial maximal zurückbewegten Position. In dieser Axialstellung des Rastkulissenkörpers 7 wirkt außerdem die Verdrehsperre 22, indem mindestens eine der Sperrnasen 22b gegen einen der Sperrstege 22a zur Anlage kommt, wodurch ein unbeabsichtigtes Verdrehen des Rastkulissenkörpers 7 zuverlässig verhindert wird. In der Ausgangsstellung B_{A} des Bedienelements 10 ist die Drehkulissenführung 17 inaktiv, da das Gegenflächenprofil 17b des Bedienelements 10 axial vom Schrägflächenprofil 17a des Rastkulissenkörpers 7 beabstandet ist.

Wenn das Bedienelement 10 vom Benutzer aus der Ausgangsstellung B_{A} heraus axial nach vorn gedrückt wird, beginnt das Rast-/Kulissenelement 20 des Bedienelements 10 aus der Rasteinrichtung 15 auszurasten, und das Gegenflächenprofil 17b nähert sich dem Schrägflächenprofil 17a, wodurch die Drehkulissenführung 17 aktiviert wird.

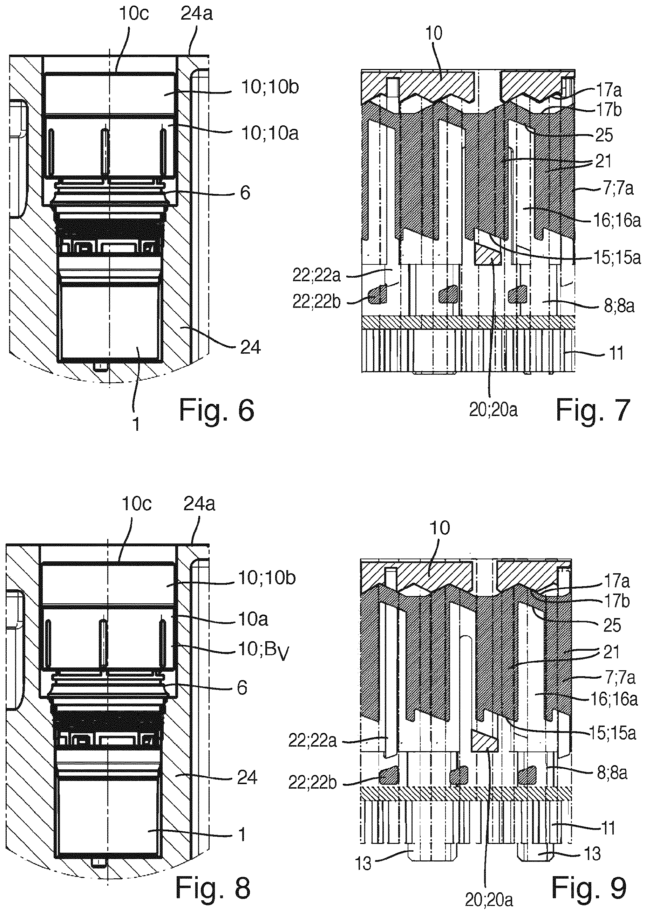

Die Fig. 6 und 7 zeigen die Situation in einer gedrückten Zwischenstellung des Bedienelements 10 zwischen seiner Ausgangsstellung B_{A} und seiner Vorwärts-Endstellung B_{V}, wobei in dieser Zwischenstellung das Rast-/Kulissenelement 20a gerade aus der Rasteinrichtung 15 freigekommen ist und das Gegenflächenprofil 17b gerade gegen das Schrägflächenprofil 17a zur Anlage kommt. In dieser Zwischenposition ist die Verdrehsperre 22 immer noch aktiv, da sich das Bedienelement 10 seiner Vorwärts-Endstellung B_{V} axial noch nicht bis auf den vorgegebenen Freigabeabstand genähert hat. Daher führt ein weiteres axiales Vordrücken des Bedienelements 10 durch den Benutzer dazu, dass das Bedienelement 10 nunmehr den Rastkulissenkörper 7 axial vorschiebt. Dadurch wird das Axialbetätigungsteil 3 des Ventils axial nach vorn gedrückt, d.h. in Richtung in die Ventilkartusche 1 hinein, wodurch die erste Ventilfunktion aktiviert wird. Hierbei kann es sich beispielsweise um eine Absperrfunktion handeln, durch die das zuvor geschlossene Ventil geöffnet wird.

Sobald sich dann das Bedienelement 10 bis auf den vorgegebenen Freigabeabstand seiner Vorwärts-Endstellung B_{V} genähert hat, ist die Verdrehsperre 22 gelöst und somit ein Verdrehen des Rastkulissenkörpers 7 gegenüber dem Drehübertragungskörper 8 freigegeben. Dazu endet der mindestens eine Sperrsteg 22a in axialer Vorwärtsrichtung auf einer axialen Höhe, die von der mindestens einen Sperrnase 22b überschritten wird, wenn das Bedienelement 10 den Rastkulissenkörper 7 entsprechend weit axial vorbewegt hat. Nach Lösen der Verdrehsperre 22 wirkt nun die Drehkulissenführung 17 mit ihren korrespondierenden Schrägflächen 17a, 17b, wodurch der Rastkulissenkörper 7 gegenüber dem Bedienelement 10 verdreht wird, das sich aufgrund seiner drehstarren Ankopplung an die Drehübertragungshülse 8 nicht mitdreht.

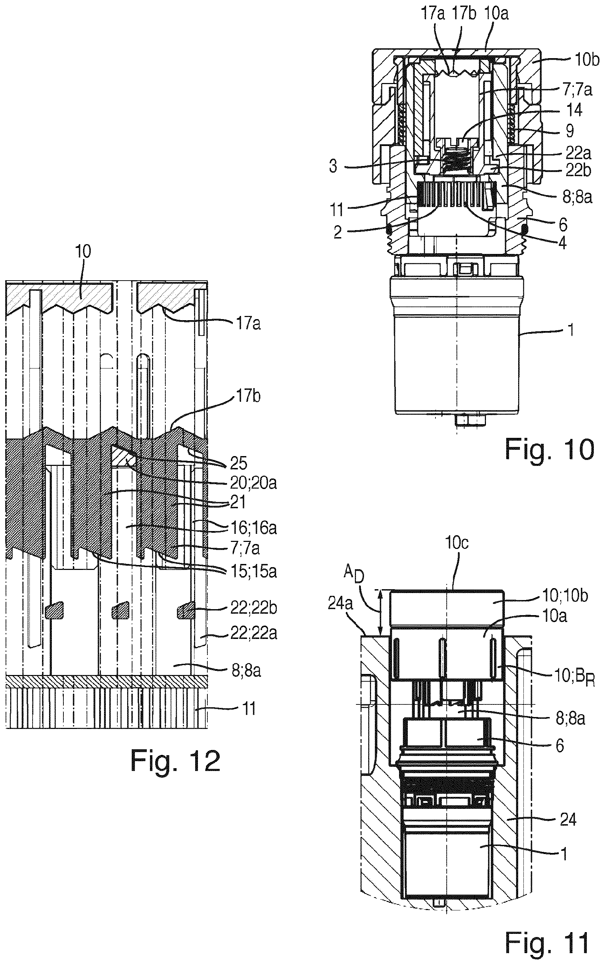

Die Fig. 8 und 9 zeigen die Situation, wenn auf diese Weise das Bedienelement 10 bis in seine Vorwärts-Endstellung B_{V} axial vorbewegt wurde. Der Rastkulissenkörper 7 hat sich um einen Winkel weitergedreht, der ausreicht, dass beim anschließenden axialen Zurückbewegen des Bedienelements 10 das Rast-/Kulissenelement 20 des Bedienelements 10 nicht mehr in die Rasteinrichtung 15 zum Halten des Bedienelements 10 in der Ausgangsstellung B_{A} zurückgelangt, sondern in die in Drehrichtung gegenüber der Rasteinrichtung 15 versetzte Axialkulisse 16, wobei das Hineingelangen des Rast- /Kulissenelements 20 in die Axialkulisse 16 von einer weiteren Verdrehung des Rastkulissenkörpers 7 begleitet sein kann, wie im gezeigten Beispiel z.B. anhand eines Vergleichs der Fig. 9 und 12 ersichtlich. Diese Zusatzdrehung erfolgt mit dem Lösen der Drehkulissenführung 17 beim axialen Zurückbewegen des Bedienelements 10 und hat zur Folge, dass sich das Schrägflächenprofil 17a des Rastkulissenkörpers 7 entsprechend weiter gegenüber dem Gegenflächenprofil 17b am Bedienelement 10 verdreht. Dadurch wird die Drehkulissenführung 17 in die Lage versetzt, beim nächsten axialen Vorbewegen des Bedienelements 10 wieder weiterdrehend auf den Rastkulissenkörper 7 einzuwirken.

Um diese Zusatzdrehung zu bewirken, kann im gezeigten Beispiel, wie aus den Fig. 8 und 9 ersichtlich, beim axialen Zurückbewegen des Bedienelements 10 das Rast-/Kulissenelement 20 z.B. durch korrespondierende Schrägflächengestaltung am Rast-/Kulissenelement 20 einerseits und an der Rasteinrichtung 15 bzw. dem Axialsteg-Stirnendbereich 15a andererseits den Rastkulissenkörper 7 so weit verdrehen, dass das Rast-/Kulissenelement 20 in die Axialkulisse 16 gelangt, sobald sich die Drehkulissenführung 17 bei noch gelöster Verdrehsperre 22 gelöst hat. Anschließend kann das Vorspannelement 9 das Bedienelement 10 axial weiter gegenüber dem Rastkulissenkörper 7 und dem Drehübertragungskörper 8 zurückdrücken, wobei das Rast-/Kulissenelement 20 in der Axialkulisse 16 geführt wird bzw. entlanggleitet, bis das Bedienelement 10 seine in den Fig. 11 und 12 gezeigte Rückwärts-Endstellung B_{R} erreicht hat.

Diese Rückwärts-Endstellung B_{R} kann z.B. dadurch definiert sein, dass das Rast-/Kulissenelement 20 des Bedienelements 10 gegen einen Endanschlag 25 der Axialkulisse 16 am Rastkulissenkörper 7 zur Anlage kommt. Wie aus Fig. 11 ersichtlich, steht das Bedienelement 10 in seiner Rückwärts-Endstellung B_{R} gegenüber der Umgebungs-Frontfläche 24a um einen Drehbetätigungsabstand A_{D} vor, der es dem Benutzer ermöglicht, das Bedienelement 10 nunmehr umfangsseitig zu ergreifen und es zu verdrehen, um die zweite Ventilfunktion zu aktivieren bzw. auszuführen. Der Drehbetätigungsabstand A_{D} kann z.B. durch Wahl einer entsprechenden axialen Länge der Axialkulisse 16 des Rastkulissenkörpers 7 geeignet groß gewählt werden, so dass der Benutzer das Bedienelement 10 umfangsseitig sicher und bequem z.B. mit den Fingern einer Hand greifen und drehen kann. Beispielsweise kann der Benutzer mit dieser zweiten Ventilfunktion das Mischungsverhältnis zweier Fluide, wie Kaltwasser und Warmwasser, und/oder die Menge an vom Ventil abgegebenem Fluid variabel, z.B. stufenlos oder alternativ in mehreren Stufen, einstellen.

Wenn der Benutzer anschließend das Ventil wieder absperren bzw. das Bedienelement 10 in seine Ausgangsstellung B_{A} verbringen will, braucht er hierzu lediglich das Bedienelement 10 wieder axial in seine Vorwärts-Endstellung B_{V} vorzudrücken. Dies löst die erste Ventilfunktion und damit z.B. das Absperren des Ventils aus, und gleichzeitig wird durch Aufheben der Verdrehsperre 22 und die Aktivierung der Drehkulissenführung 17 der Rastkulissenkörper 7 in seiner nächste Drehstellung relativ zum Bedienelement 10 und zum Drehübertragungskörper 8 weitergedreht. Nach Loslassen des Bedienelements durch den Benutzer gelangt dann das Bedienelement 10 wieder in seine selbsthaltende Ausgangsstellung B_{A}, indem sein Rast-/Kulissenelement 20 durch das Weiterdrehen des Rastkulissenkörpers 7 nicht mehr in die Axialkulisse 16 zurückgelangt, sondern wieder mit der Rasteinrichtung 15 rastend zusammenwirkt.

Wie die gezeigten und oben erläuterten Ausführungsbeispiele deutlich machen, stellt die Erfindung eine vorteilhafte Ventilbetätigungsvorrichtung zur Verfügung, mit der sich ein Ventil in einer Axialbetätigungsbewegung für eine erste Ventilfunktion und in einer Drehbetätigungsbewegung für eine zweite Ventilfunktion mit hohem Bedienkomfort und Funktionszuverlässigkeit betätigen lässt. Die Ventilbetätigungsvorrichtung ist vorteilhaft bei entsprechenden Sanitärventilen verwendbar, jedoch in gleicher Weise für beliebige andere Ventile, bei der eine Axialbetätigungsbewegung für eine erste Ventilfunktion und eine Drehbetätigungsbewegung für eine zweite Ventilfunktion gefordert ist. Die Ventilbetätigungsvorrichtung kommt mit einem einzigen, einheitlich vom Benutzer bewegbaren, speziell dreh- und axialbeweglichen, Bedienelement aus, zwei voneinander unabhängig zu bewegende Bedienelemente sind folglich für die Ausführung der beiden Ventilfunktionen nicht erforderlich.

## Patentansprüche

1. Ventilbetätigungsvorrichtung zur Betätigung eines Ventils, insbesondere eines Sanitärventils, in einer Axialbetätigungsbewegung für eine erste Ventilfunktion, insbesondere eine Absperrfunktion, und in einer Drehbetätigungsbewegung für eine zweite Ventilfunktion, insbesondere eine Mengenregulier- oder Mischfunktion, mit
- einem Drehübertragungskörper (8), der mit einem Drehbetätigungsteil des Ventils verbindbar ist,
- einem als Nutzerschnittstelle fungierenden, kombiniert dreh- und axialbeweglichen Bedienelement (10), das drehfest und axialbeweglich mit dem Drehübertragungskörper gekoppelt ist und eine selbsthaltende Ausgangsstellung (B_{A}), eine gegenüber der Ausgangsstellung axial vorverlagerte Vorwärts-Endstellung (B_{V}) und eine gegenüber der Ausgangsstellung axial zurückverlagerte, selbsthaltende Rückwärts-Endstellung (B_{R}) aufweist, wobei es durch Vorbewegung in die Vorwärts-Endstellung die erste Ventilfunktion aktiviert und durch Verdrehung die zweite Ventilfunktion aktiviert,
- einem elastischen Vorspannelement (9), welches das Bedienelement axial in Richtung der Rückwärts-Endstellung vorspannt,
- einem Rastkulissenkörper (7), der drehbeweglich und axialfest mit einem Axialbetätigungsteil des Ventils verbindbar ist und der in Drehrichtung versetzt eine Rasteinrichtung (15) zum Halten des Bedienelements in der Ausgangsstellung und eine Axialkulisse (16) zum Freigeben einer Axialbewegung des Bedienelements in die Rückwärts-Endstellung aufweist, und
- einer zwischen dem Bedienelement und dem Rastkulissenkörper wirkenden Drehkulissenführung (17) zum Verdrehen des Rastkulissenkörpers beim Vorbewegen des Bedienelements in die Vorwärts-Endstellung.

2. Ventilbetätigungsvorrichtung nach Anspruch 1, wobei der Rastkulissenkörper als eine Rastkulissenhülse (7a) mit einer Hülsenmantelfläche (19) ausgebildet ist, an der die Rasteinrichtung und die Axialkulisse ausgebildet sind, mit denen wenigstens ein korrespondierendes Rast-/Kulissenelement (20) des Bedienelements zusammenwirkt.

3. Ventilbetätigungsvorrichtung nach Anspruch 2, wobei die Rasteinrichtung von einem Stirnendbereich (15a) mindestens eines an der Hülsenmantelfläche radial vorspringenden Axialsteges (21) gebildet ist und/oder die Axialkulisse von mindestens einer axialen Ausnehmung (16a) in der Hülsenmantelfläche gebildet ist.

4. Ventilbetätigungsvorrichtung nach einem der Ansprüche 1 bis 3, wobei der Rastkulissenkörper als eine Rastkulissenhülse (7a) ausgebildet ist, die an einer Stirnseite ein Schrägflächenprofil (17a) als rastkörperseitiger Teil der Drehkulissenführung aufweist, und das Bedienelement ein mit dem Schrägflächenprofil zusammenwirkendes Gegenflächenprofil (17b) als bedienelementseitiger Teil der Drehkulissenführung aufweist.

5. Ventilbetätigungsvorrichtung nach einem der Ansprüche 1 bis 4, wobei der Rastkulissenkörper als eine Rastkulissenhülse (7a) ausgebildet ist und der Drehübertragungskörper als eine Drehübertragungshülse (8a) ausgebildet ist, die koaxial zur Rastkulissenhülse angeordnet ist.

6. Ventilbetätigungsvorrichtung nach einem der Ansprüche 1 bis 5, wobei sie eine zwischen dem Rastkulissenkörper und dem Drehübertragungskörper wirkende Verdrehsperre (22) aufweist, die ein Verdrehen des Rastkulissenkörpers gegenüber dem Drehübertragungskörper nur dann freigibt, wenn der axiale Abstand des Bedienelements von seiner Vorwärts-Endstellung einen vorgebbaren Freigabeabstand unterschreitet.

7. Ventilbetätigungsvorrichtung nach Anspruch 6, wobei die Verdrehsperre mindestens einen axial verlaufend radial am Drehübertragungskörper abstehenden Sperrsteg (22a) und mindestens eine mit diesem korrespondierend zusammenwirkende, radial am Rastkulissenkörper abstehende Sperrnase (22b) umfasst.

8. Sanitärventil mit einer Absperrfunktion und einer Mengenregulier- oder Mischfunktion, mit
- einer Ventilkartusche (1) mit einem Drehbetätigungsteil (2) zur Bewirkung der Mengenregulier- oder Mischfunktion und mit einem Axialbetätigungsteil (3) zur Bewirkung der Absperrfunktion und
- einer an der Ventilkartusche angebrachten Ventilbetätigungsvorrichtung nach einem der Ansprüche 1 bis 7.

## Claims

1. Valve actuation device for actuating a valve, preferably a sanitary valve, in an axial actuation movement for a first valve function, preferably a shut-off function, and in a rotary actuation movement for a second valve function, preferably a quantity regulation or mixing function, comprising
- a rotation transmission body (8) which is connectable to a rotary actuation member of the valve;
- an operating element (10), rotationally and axially movable in a combined manner, acting as a user interface, which operating element is coupled to the rotation transmission body rotationally fixed and axially moveable and has a self-retaining initial position (B_{A}), a forward end position (B_{V}) axially ahead of the initial position and a self-retaining rearward end position (B_{R}) axially behind the initial position, wherein by advancing it to the forward end position the first valve function is activated and by turning it the second valve function is activated;
- an elastic biasing element (9) which biases the operating element axially in the direction towards the rearward end position;
- a locking slide body (7) which is connectable to an axial actuation member of the valve for rotational movement and axially fixed, and which comprises a locking device (15), offset in the rotational direction, for retaining the operating element in the initial position, and an axial sliding link (16) for enabling an axial movement of the operating element towards the rearward end position; and
- a rotary sliding link mechanism (17) operative between the operating element and the locking slide body for turning the locking slide body during advancing of the operating element towards the forward end position.

2. Valve actuation device according to claim 1, wherein the locking slide body is configured as a locking slide sleeve (7a) having a sleeve lateral surface (19), on which the locking device and the axial sliding link are provided, with which at least one corresponding locking/sliding link element (20) of the operating element cooperates.

3. Valve actuation device according to claim 2, wherein the locking device is formed by a face end region (15a) of at least one axial web (21) radially projecting from the sleeve lateral surface and/or the axial sliding link is formed by at least one axial recess (16a) in the sleeve lateral surface.

4. Valve actuation device according to any one of claims 1 to 3, wherein the locking slide body is in the form of a locking slide sleeve (7a) which has a bevel profile (17a) on an end face as a locking body-related part of the rotary sliding link mechanism, and the operating element has a counterface profile (17b) cooperating with the bevel profile as an operating element-related part of the rotary sliding link mechanism.

5. Valve actuation device according to any one of claims 1 to 4, wherein the locking slide body is in the form of a locking slide sleeve (7a) and the rotation transmission body is in the form of a rotation transmission sleeve (8a) which is arranged coaxially to the locking slide sleeve.

6. Valve actuation device according to any one of claims 1 to 5, wherein an anti-twist arrangement (22) is provided between the locking slide body and the rotation transmission body, to enable turning of the locking slide body in relation to the rotation transmission body only in case that the axial distance of the operating element from its forward end position goes below a pre-determinable enabling distance.

7. Valve actuation device according to claim 6, wherein the anti-twist arrangement comprises at least one axially extending blocking web (22a) radially protruding from the rotation transmission body and at least one blocking lug (22b) radially protruding from the locking slide body and correspondingly cooperating with said blocking web.

8. Sanitary valve having a shut-off function and a quantity regulation or mixing function, comprising
- a valve cartridge (1) comprising a rotary actuation member (2) for effecting the quantity regulation or mixing function and comprising an axial actuation member (3) for effecting the shut-off function, and
- a valve actuation device according to any one of claims 1 to 7, attached to the valve cartridge.

## Revendications

1. Dispositif d'actionnement de vanne pour actionner une vanne, en particulier une vanne sanitaire, selon un mouvement d'actionnement axial pour une première fonction de vanne, en particulier une fonction d'arrêt, et selon un mouvement d'actionnement rotatif pour une deuxième fonction de vanne, en particulier une fonction de régulation de débit ou de mélange, comprenant
- un corps de transmission de rotation (8) susceptible d'être relié à une partie d'actionnement rotatif de la vanne,
- un élément de commande (10) faisant office d'interface utilisateur et susceptible d'être déplacé de manière combinée en rotation et en translation axiale, qui est couplé au corps de transmission de rotation solidairement en rotation et de façon mobile en translation axiale et qui présente une position initiale (B_{A}) auto-maintenue, une position de fin de course avant (B_{V}) avancée axialement par rapport à la position initiale, et une position de fin de course arrière (B_{R}) auto-maintenue et reculée axialement par rapport à la position initiale, l'élément de commande activant la première fonction de la vanne par un mouvement d'avance vers la position de fin de course avant et activant la deuxième fonction de la vanne par une rotation,
- un élément de précontrainte élastique (9) qui précontraint l'élément de commande axialement en direction de la position de fin de course arrière,
- un corps à coulisse de verrouillage (7) qui peut être relié de manière mobile en rotation et solidairement en translation axiale à une partie d'actionnement axial de la vanne et qui présente, décalé dans le sens de rotation, un organe de verrouillage (15) pour maintenir l'élément de commande dans la position initiale, et une coulisse axiale (16) pour libérer un mouvement axial de l'élément de commande vers la position de fin de course arrière, et
- un guidage à coulisse rotative (17) agissant entre l'élément de commande et le corps à coulisse de verrouillage pour faire tourner le corps à coulisse de verrouillage lors de l'avance de l'élément de commande vers la position de fin de course avant.

2. Dispositif d'actionnement de vanne selon la revendication 1,
dans lequel le corps à coulisse de verrouillage est réalisé sous la forme d'une douille de coulisse de verrouillage (7a) ayant une surface enveloppe de douille (19), sur laquelle sont réalisés l'organe de verrouillage et la coulisse axiale, avec lesquels coopère au moins un élément de verrouillage/de coulisse correspondant (20) de l'élément de commande.

3. Dispositif d'actionnement de vanne selon la revendication 2,
dans lequel l'organe de verrouillage est formé par une zone d'extrémité frontale (15a) d'au moins une barrette axiale (21) faisant saillie radialement de la surface enveloppe de douille, et/ou la coulisse axiale est formée par au moins un évidement axial (16a) dans la surface enveloppe de douille.

4. Dispositif d'actionnement de vanne selon l'une des revendications 1 à 3, dans lequel le corps à coulisse de verrouillage est réalisé sous la forme d'une douille de coulisse de verrouillage (7a) qui présente sur une face frontale un profil de surface inclinée (17a) en tant que partie côté corps de verrouillage du guidage à coulisse rotative, et l'élément de commande présente un profil de surface antagoniste (17b) coopérant avec le profil de surface inclinée en tant que partie côté élément de commande du guidage à coulisse rotative.

5. Dispositif d'actionnement de vanne selon l'une des revendications 1 à 4, dans lequel le corps à coulisse de verrouillage est réalisé sous la forme d'une douille de coulisse de verrouillage (7a), et le corps de transmission de rotation est réalisé sous la forme d'une douille de transmission de rotation (8a) disposée coaxialement à la douille de coulisse de verrouillage.

6. Dispositif d'actionnement de vanne selon l'une des revendications 1 à 5, comprenant un blocage anti-rotation (22) agissant entre le corps à coulisse de verrouillage et le corps de transmission de rotation, qui ne libère une rotation du corps à coulisse de verrouillage par rapport au corps de transmission de rotation que lorsque la distance axiale de l'élément de commande par rapport à sa position de fin de course avant est inférieure à une distance de libération prédéfinissable.

7. Dispositif d'actionnement de vanne selon la revendication 6,
dans lequel le blocage anti-rotation comprend au moins une barrette de blocage (22a) s'étendant axialement et faisant saillie radialement du corps de transmission de rotation et au moins un ergot de blocage (22b) coopérant de manière correspondante avec celle-ci et faisant saillie radialement du corps à coulisse de verrouillage.

8. Vanne sanitaire ayant une fonction d'arrêt et une fonction de régulation de débit ou de mélange, comprenant
- une cartouche de vanne (1) ayant une partie d'actionnement rotatif (2) pour assurer la fonction de régulation de débit ou de mélange, et ayant une partie d'actionnement axial (3) pour assurer la fonction d'arrêt, et
- un dispositif d'actionnement de vanne selon l'une des revendications 1 à 7, monté sur la cartouche de vanne.
